# EUROPÄISCHE PATENTANMELDUNG

(11) **EP 1 661 448 A1**
(43) Veröffentlichungstag der Anmeldung: **31.05.2006**
(21) Anmeldenummer: 05021485.7
(22) Anmeldetag: 30.09.2005
(51) Int. Cl.: A01D 41/14, A01D 41/00, A01B 73/00

(54) **Mähdrescher**

(30) Priorität: 25.11.2004 DE 102004057048
(71) Anmelder: CLAAS Selbstfahrende Erntemaschinen GmbH, 33428 Harsewinkel (DE)
(72) Erfinder: Weigelt, Horst, Dr., 33332 Gütersloh (DE)

(57) **Zusammenfassung**

Die Erfindung betrifft einen selbstfahrenden Mähdrescher (1) mit einer bewegbaren Fahrerkabine (20), wobei die Fahrerkabine (20) für die Erntefahrt in Arbeitsposition (21) in unmittelbare Nähe zu dem Vorsatzgerät (3) bewegbar ist und indem die Fahrerkabine (20) in Nichtarbeitsposition (25) für die Straßenfahrt von dem Vorsatzgerät (3) weg bewegbar ist. Hierdurch wird gewährleistet, dass der Mähdrescher (1) in zwei unterschiedliche Fahrtrichtungen (EFR, SFR) betrieben werden kann und der Fahrer eine optimale Sicht in die jeweilige Fahrtrichtung (EFR, SFR) hat.

## Beschreibung

Die Erfindung betrifft eine Vorrichtung und ein Verfahren zur Bewegung einer Fahrerkabine und Arbeitsaggregatmodulen an einem Mähdrescher nach dem Oberbegriff der Ansprüche 1 und 15.

Zur Aufnahme von Erntegut ist einem Mähdrescher frontseitig ein Vorsatzgerät zugeordnet. Die Ausführung des Vorsatzgerätes ist abhängig von dem zu erntenden Erntegut. Um eine möglichst große Erntegutmenge zu bearbeiten sind die Vorsatzgeräte sehr breit ausgelegt. Hierbei stellt sich das Problem der sicheren und einfachen Ernte- wie auch Straßenfahrt mit Schneidwerken großer Arbeitsbreite. Aus diesem Grund ist für die Straßenfahrt das Schneidwerk zunächst von dem Mähdrescher abzuhängen und auf einen Schneidwerkswagen abzulegen, so dass der Schneidwerkswagen dann an den Mähdrescher angehängt werden kann.

Die EP 0 326 836 B1 offenbart einen selbstfahrenden Mähdrescher mit einem zweiteiligen, klappbaren Schneidwerk. Aufgrund der klappbaren Ausführung des Schneidwerkes, kann das Schneidwerk nach dem Erntebetrieb mittig zusammengeführt werden, so dass sich die Schneidwerksbreite für den Straßentransport um die Hälfte und auf eine für die Fahrt auf öffentlichen Straßen zulässige Gesamtbreite reduziert. Hierdurch wird dem Fahrer des Mähdreschers ein zeitaufwendiges und kompliziertes Abhängen und Anhängen des Schneidwerks erspart, so dass er unmittelbar nach dem Abernten eines Feldes mit geringem Aufwand durch einfaches Verklappen des Schneidwerks die Straßenfahrt beginnen und sich auf das nächste Feld begeben kann.

Nachteilig an der in der EP 0 326 836 B1 offenbarten Ausführung ist die notwendige schmale Ausführung des Schneidwerkes, da bei breiter ausgeführten Schneidwerken die Sicht des Fahrers, aufgrund des sich vor der Fahrerkabine aufbauenden verklappten Schneidwerks, eingeschränkt wird. Zudem können nur relativ schmale Schneidwerke verklappt werden, da breiter ausgeführte Schneidwerke trotz Verkläppung schnell die zulässige Straßenbreite überschreiten würden. Eine sichere Straßenfahrt wäre damit ausgeschlossen.

Um dem Fahrer eine übersichtliche Straßen- und Erntefahrt zu ermöglichen, offenbart die DE 199 58 280 A1 einen selbstfahrenden Mähdrescher mit zwei Fahrerkabinen. Nachteilig an dieser Ausführung sind die hohen Kosten, die für die Integration einer zweiten Fahrerkabine in einen Mähdrescher anfallen.

Es ist daher Aufgabe der Erfindung die Nachteile des zitierten Standes der Technik zu vermeiden und dem Fahrer des Mähdreschers eine effiziente Ernte- und eine sichere Straßenfahrt zu ermöglichen.

Diese Aufgabe wird erfindungsgemäß durch die kennzeichnenden Merkmale des Patentansprüche 1 und 15 gelöst, wobei in den weiteren Patentansprüchen Merkmale aufgeführt sind, die diese Lösung in vorteilhafter Weise weiterentwickeln.

Indem die Fahrerkabine des Mähdreschers für die Erntefahrt in Arbeitsposition in unmittelbare Nähe zu dem Vorsatzgerät bewegbar ist und indem die Fahrerkabine in Nichtarbeitsposition für die Straßenfahrt von dem Vorsatzgerät weg bewegbar ist, wird gewährleistet, dass der Mähdrescher in zwei unterschiedlichen Fahrtrichtungen betrieben werden kann und der Fahrer eine optimale Sicht in der jeweilige Fahrtrichtung hat.

Damit der Fahrer des Mähdreschers während der Erntefahrt einen genauen Überblick über das auf dem Feld stehende und zu erntende Erntegut hat, hat es sich als vorteilhaft erwiesen, den Fahrersitz und damit die Fahrerkabine in der Arbeitsposition bei einem einteiligen Vorsatzgerät unmittelbar hinter dem Vorsatzgerät und bei einem mehrteiligen Vorsatzgerät zwischen zumindest zwei Arbeitsaggregatmodulen des Vorsatzgerätes zu positionieren.

Durch eine exzentrische Bewegung der Fahrerkabine kann die Fahrerkabine über die gesamte Länge des Mähdreschers, auf dem Mähdrescher angeordnete Funktionsbaugruppen umgreifend, verschwenkt werden. Dies schafft eine hohe Flexibilität für die Anordnung weiterer Baugruppen auf dem Mähdrescher. In vorteilhafter Weiterbildung der Erfindung kann die Fahrerkabine auch zentrisch von der Arbeits- in die Nichtarbeitsposition bewegt werden, wobei dies insbesondere einen kurzen Schwenkweg ermöglicht.

Auf konstruktiv einfache Weise kann die Bewegung der Fahrerkabine durch eine längenveränderliche Schwenkvorrichtung realisiert werden, die sowohl ein Verschieben als auch Verschwenken der Fahrerkabine von der Arbeits- in die Nichtarbeitsposition bewirkt.

Eine hohe Flexibilität bezüglich der Bewegung der Fahrerkabine als auch bezüglich der Realisierung großer Arbeitsbreiten wird dann erreicht, wenn das Vorsatzgerät modular aufgebaut ist und die Arbeitsaggregatmodule zumindest aus einem Schneidwerk und einer dem Schneidwerk nachgeordneten Drescheinrichtung gebildet werden und den Arbeitsaggregatmodulen zugleich eine Erntegutzerkleinerungseinrichtung zugeordnet ist, sodass der Trägerfahrzeugmodul im einfachsten Fall nur eine Reinigungseinrichtung und ein Erntegutspeichermodul umfassen muss. Auf diese Weise reduziert sich der Bauraumbedarf für den Trägerfahrzeugmodul, sodass sich ein größerer Bereich für die kollisionsfreie Bewegung der Fahrerkabine ergibt. Zudem ergibt sich ein größerer Stauraum für die auf dem Trägerfahrzeugmodul angeordneten Arbeitsorganmodule in deren Nichtarbeitsposition.

Damit eine den individuellen Erntebedingungen anpassbare Arbeitsbreite des Vorsatzgerätes eingestellt werden kann, ist der modulare Aufbau des Vorsatzgerätes veränderbar. Dass heißt, es können mehrere Arbeitsaggregatmodule verwendet werden, um eine maximale Auslastung des Mähdreschers und die effektivste Arbeitsbreite zu erreichen. Im Bedarfsfall kann die Anzahl der Arbeitsaggregatmodule aber auch reduziert werden, um auf schwierigem Gelände die Erntefahrt zu erleichtern.

Um einen uneingeschränkten Erntebetrieb zu gewährleisten sind bei einem mehrteiligen Vorsatzgerät die Arbeitsaggregatmodule unabhängig voneinander oder gemeinsam betreibbar. Insbesondere bietet das unabhängige Betreiben der Arbeitsaggregatmodule eine optimale Anpassung des jeweiligen Vorsatzgerätes an einen unterschiedlichen Erntegutbestand oder ein sich veränderndes Bodenniveau.

Alternativ hat der Fahrer des Mähdreschers die Möglichkeit die Arbeitsaggregate auf einer Linie oder versetzt zueinander zu führen, wobei die Linienführung eine größere Arbeitsbreite ermöglicht und die versetzte Führung der Arbeitsaggregate die Möglichkeit der unmittelbaren Schwadablage oder Gutverteilung bietet. Zudem ermöglicht die versetzte Führung der Arbeitsaggregate zueinander eine bessere Gewichtsverteilung auf die unterschiedlichen Fahrzeugachsen des Mähdreschers.

Indem die Arbeitsaggregatmodule von einer Arbeits- in eine Nichtarbeitsstellung verschwenkbar sind und die Arbeitsaggregatmodule in der Nichtarbeitsstellung zumindest teilweise im Bereich der Fahrerkabine in deren Arbeitsstellung angeordnet sind kann der Fahrer des Mähdreschers ohne großen Aufwand die erforderliche Fahrerkabineneinstellung für die von ihm gewollte Fahrtrichtung vornehmen. Zudem wird auf diese Weise sichergestellt, dass der Mähdrescher eine effiziente Ernte- und eine sichere Straßenfahrt gewährleistet. Diese Effekt sind dann um so ausgeprägter, wenn in erfindungsgemäßer Weiterbildung der Erfindung zudem der Erntegutspeichermodul von einer Arbeitsposition in eine Nichtarbeitsposition bewegbar ist und die Arbeitsaggregatmodule in ihrer Nichtarbeitsposition wenigstens teilweise in dem Bereich des Erntegutspeichermoduls in dessen Arbeitsposition angeordnet sind.

Eine weitere Entlastung zur Einstellung der Fahrerkabinenposition erfährt der Fahrer des Mähdreschers, indem die Bewegung der Fahrerkabine an die Bewegung des Vorsatzgerätes und die Bewegung der Erntegutspeichereinrichtung an die Bewegung der Fahrerkabine und/oder des Vorsatzgerätes gekoppelt ist.

Eine besonders raumsparende Ausgestaltung der Erfindung ergibt sich dann, wenn die Arbeitsaggregatmodule in der Nichtarbeitsposition in vertikaler Richtung zueinander gestaffelt auf dem Mähdrescher angeordnet sind.

Weitere vorteilhafte Ausgestaltungen sind Gegenstand weiterer Unteransprüche und werden nachfolgend anhand von Zeichnungen näher erläutert.

Es zeigen:
- Figur 1:: eine Draufsicht auf einen selbstfahrenden Mähdrescher im Erntebetrieb und
- Figur 2:: eine Draufsicht auf einen selbstfahrenden Mähdrescher nach Figur 1 während der Straßenfahrt.

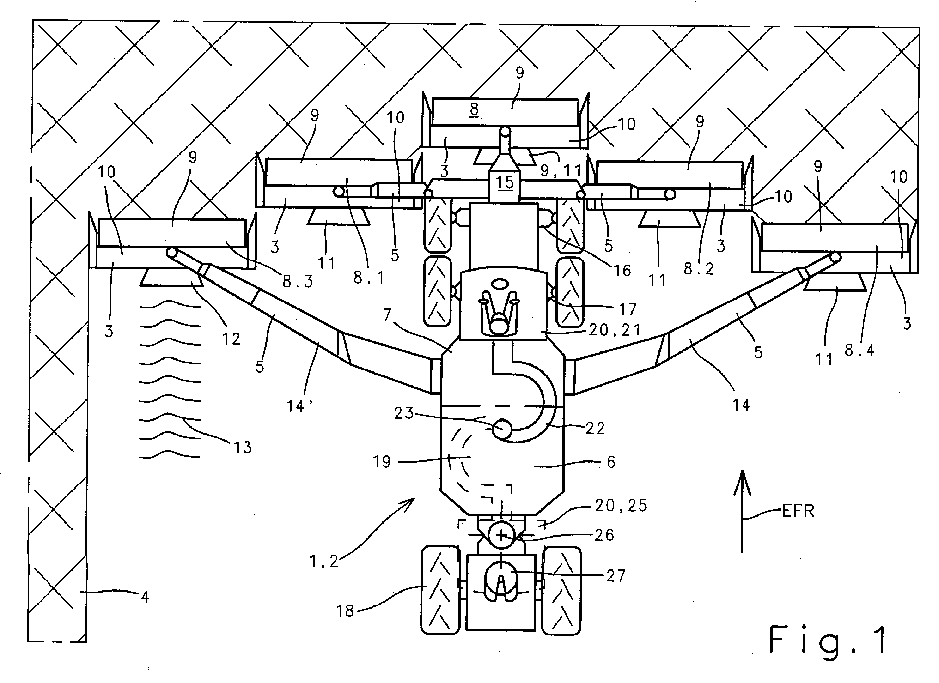

Figur 1 zeigt eine Draufsicht auf eine als selbstfahrender Mähdrescher 1 ausgeführte landwirtschaftliche Arbeitsmaschine 2. In dem frontseitigen Bereich des Mähdreschers 2 ist ein Vorsatzgerät 3 angeordnet, welches das zu erntende Erntegut 4 aberntet und über ein geeignetes Förderorgan 5 einer Reinigungseinrichtung 7 und einem als Korntank ausgeführten Erntegutspeichermodul 6 zuführt. Im vorliegenden Ausführungsbeispiel ist das Vorsatzgerät 3 aus mehreren Arbeitsaggregatmodulen 8 in noch näher zu beschreibender Weise zusammengesetzt. Jedes Arbeitsaggregatmodul 8 wird in seinem frontseitigen Bereich von einem Schneidwerk 9 gebildet, dem jeweils eine an sich bekannte Drescheinrichtung 10 nachgeordnet ist. In dem dargestellten Ausführungsbeispiel sind die Drescheinrichtungen 10 so gestaltet, dass nicht zu erntende Bestandteile unmittelbar im rückwärtigen Bereich der Drescheinrichtungen 10 über sogenannte Häckselvorrichtungen 11 auf dem Boden verteilt oder über eine Gutaustrittsöffnung 12 bei deaktivierter Häckseleinrichtung 11 in einem Schwad 13 abgelegt werden.

Die Arbeitsaggregatmodule 8 sind versetzt zueinander und sich überschneidend angeordnet. Die überschneidende Anordnung hat den Vorteil, dass in Kurvenfahrten kein Resterntegutbestand auf dem Feld zurückbeleibt. Denkbar ist aber auch eine Anordnung der Arbeitsaggregatmodule 8 auf einer Linie, um eine möglichst große Arbeitsbreite zu erzielen. Der modulare Aufbau des Vorsatzgerätes 3 ist in der Weise änderbar, dass das Vorsatzgerät 3 um einzelne Arbeitsaggregatmodule 8 erweiterbar ist. So bietet es sich in ebenem Gelände an, eine Vielzahl von Arbeitsaggregatmodulen 8 zu verwenden, um eine möglichst große Arbeitsbreite und damit ein schnelles Bearbeiten des Feldes zu ermöglichen. Im Gegensatz hierzu ist eine schmale Arbeitsbreite in schwierigem und unebenem Gelände von Vorteil, da in diesen Fällen ein zu breites Vorsatzgerät 3 die Mobilität des Mähdreschers 1 stark einschränkt. Die Verringerung der Arbeitsbreite erfolgt auf einfache und schnelle Weise durch das Ablegen und Abkoppeln der jeweiligen Arbeitsaggregatmodule 8.

Die Arbeitsaggregatmodule 8 selbst sind über einen Schwenkarm 14 mit dem Mähdrescher 1 verbunden. Besonders vorteilhaft ist hierbei, dass die Verbindung des Schwenkarms 14 mit dem Mähdrescher 1, wobei der Schwenkarm 14 auch längenveränderbar ausgeführt sein kann, an unterschiedlichen Stellen des Mähdreschers 1 erfolgt. Im zugrundeliegenden Ausführungsbeispiel sind dem Mähdrescher 1 frontseitig drei Arbeitsaggregatmodule 8, 8.1, 8.2 zugeordnet. Das Gewicht dieser drei Arbeitsaggregatmodule 8, 8.1, 8.2 wird im wesentlichen über eine frontseitig dem Mähdrescher zugeordnete Aufnahmevorrichtung 15 über das Frontfahrwerk 16 auf dem Boden abgestützt. Da die Schwenkarme 14 und 14' zwischen einem mittleren Fahrwerk 17 und einem Heckfahrwerk 18 angeordnet sind, wird das Gewicht der Schwenkarme 14, 14'sowie der vierten und fünften Arbeitsaggregatmodule 8.3, 8.4 im wesentlichen über das mittlere Fahrwerk 17 und das Heckfahrwerk 18 auf dem Boden abgestützt. Auf diese Weise wird eine optimale Gewichtsverteilung auf mehrere Fahrzeugachsen 16-18 erreicht und darüber hinaus ein gleichmäßigerer und niedrigerer Bodendruck erzielt.

Im dargestellten Ausführungsbeispiel nehmen die Arbeitsaggregatmodule 8, 8.1 - 8.4 das Erntegut 4 auf, schneiden es und führen es einer in dem jeweiligen Arbeitsaggregatmodul 8 integrierten Drescheinrichtung 10 zu. Die Drescheinrichtung 10 trennt die Erntegutkörner von den Nichterntegutbestandteilen, so dass die Körner über ein Förderorgan 5 wie beispielsweise eine pneumatischen Förderleitung oder eine Förderschnecke in den auf dem Trägerfahrzeugmodul 19 angeordneten Korntank 6 gefördert werden. Um eine intensive Reinigung des Ernteguts 4 zu gewährleisten, können die Körner, die teilweise noch mit Nichtkornbestandteilen verunreinigt sind, anstelle der Direktleitung in den Korntank 6, an eine ebenfalls in den Trägerfahrzeugmodul 19 des Mähdreschers 1 integrierte Reinigungseinrichtung 7 übergeben werden, bevor sie anschließend in den Korntank 6 gefördert werden. Weiter sind die Arbeitaggregatmodule 8, 8.1 - 8.4 so strukturiert und angetrieben, dass sie in nicht näher beschriebener Weise unabhängig voneinander oder gemeinsam betrieben werden können.

Auf dem Mähdrescher 1 ist eine dem Trägerfahrzeugmodul 19 zugeordnete Fahrerkabine 20 angebracht. Für die Erntefahrt ist die Fahrerkabine 20 in der mit einem Pfeil gekennzeichneten Erntefahrtrichtung EFR in Arbeitsposition 21 verschwenkt. Die Arbeitsposition 21 befindet sich in unmittelbarer Nähe zu dem Vorsatzgerät 3, so dass der Fahrer des Mähdreschers 1 einen optimalen Überblick über das abzuerntende Feld und der Lage des Vorsatzgerätes 3 zu dem Erntegutbestand 4 hat. Nach dem zugrundeliegenden Ausführungsbeispiel ist die Fahrerkabine 21 mittig über dem mittleren Fahrwerk 17 und zwischen den vierten und fünften Arbeitsaggregatmodulen 8.3, 8.4 angeordnet. Bei einem einteiligen Vorsatzgerät 3 ist die Fahrerkabine 20 unmittelbar hinter dem Vorsatzgerät 3 angeordnet.

Die Fahrerkabine 20 ist auf einer Schwenkvorrichtung 22 angebracht, wobei die Fahrerkabine 20 um eine vertikale Drehachse 23 horizontal schwenkbar ist. Die Schwenkvorrichtung 22 kann als längenveränderlicher Schwenkarm 24 oder, wie abgebildet, als bogenförmiger Schwenkarm 24 ausgebildet sein. Die Bogenform des Schwenkarms 24 bietet den Vorteil, dass aufgrund des Bogens keine Einschränkung des Bauraums erforderlich ist. Vorstellbar sind aber auch nicht abgebildete Leitelemente, die um den Korntank 6 herum geführt sind und über die die Fahrerkabine 20 von der Arbeitsposition 21 in die Nichtarbeitsposition 25 bewegt wird. Zudem ist es denkbar, dass die Bewegung der Fahrerkabine 20 und die Bewegung des Korntanks 6 aneinander gekoppelt ist. Dies könnte beispielsweise dadurch erzielt werden, dass die Fahrerkabine und der Korntank 6 in nicht dargestellten Linearführungen verschiebbar sind, sodass der Korntank 6 und die Fahrerkabine 20 gemeinschaftlich in eine Nichtarbeitsposition 25 verbringbar sind. Zudem kann der landwirtschaftlichen Arbeitsmaschine 2 in ihrem heckseitigen Bereich eine Sattelkupplung zugeordnet sein mittels derer ein nicht dargestellter, als Ladehänger ausgeführter Erntegutspeichermodul 6 von dem Mähdrescher 1 mitführbar ist. Dies hat insbesondere den Vorteil, dass der Erntegutspeichermodul 6 nicht dem Trägerfahrzeugmodul 19 zugeordnet ist und so ein größerer Freiraum zum Verbringen der Arbeitsaggregatmodule 8 in die Nichtarbeitsposition 25 zur Verfügung steht.

Durch die exzentrische Anordnung der vertikalen Drehachse 23 wird die Fahrerkabine 20 von der Arbeitsposition 21 in eine Nichtarbeitsposition 25 verschwenkt, wobei die Fahrerkabine 20 um 180 ° im Uhrzeigersinn gedreht wird. Demgemäss wird die Fahrerkabine 20 von der mittigen Stellung über dem mittleren Fahrwerk 17 auf die mittige Position über dem Heckfahrwerk 18 in den rückwärtigen Bereich des Mähdreschers 1 verschwenkt. Es liegt im Rahmen der Erfindung, die Fahrerkabine 20 drehbeweglich an der Schwenkvorrichtung 22 zu belassen oder von der Schwenkvorrichtung 22 zu entkoppeln und in der Nichtarbeitsposition 25 auf dem Trägerfahrzeugmodul 19 des Mähdreschers 1 abzulegen und ortsfest über dem Heckfahrwerk 18 anzuordnen.

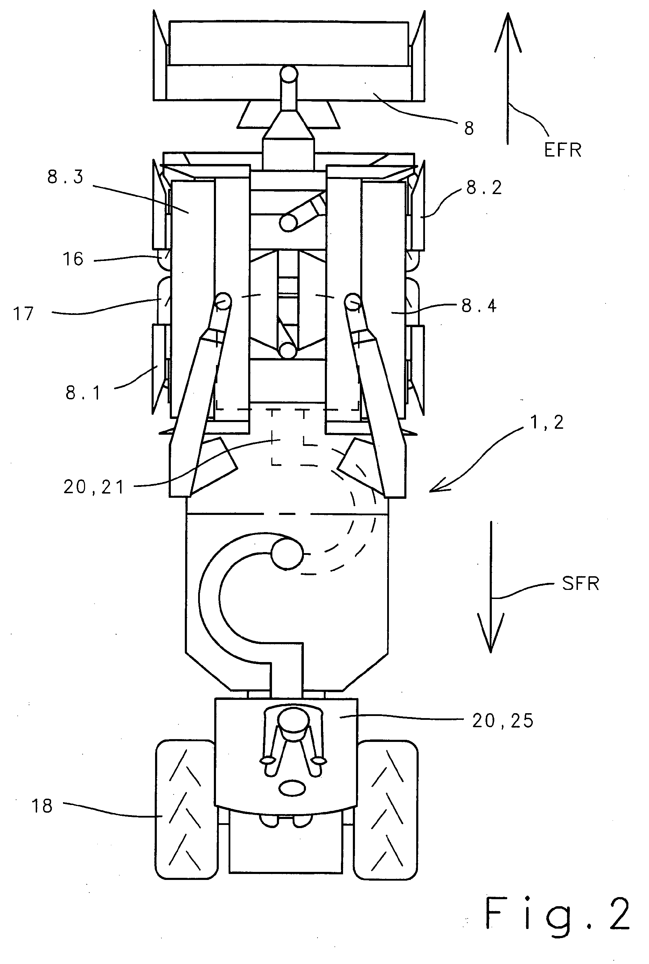

Figur 2 zeigt die verschwenkte Fahrerkabine 20 in der Nichtarbeitsposition 25. Die Fahrerkabine 20 ist auf einer nicht abgebildeten Abstellfläche mittig über dem Heckfahrwerk 18 abgesetzt und ortsfest angeordnet. Diese Position der Fahrerkabine 20 gewährleistet eine optimale Straßenfahrt, da der Fahrer des Mähdreschers 1 einen uneingeschränkten Blick in die durch einen Pfeil gekennzeichneten Fahrtrichtung SFR hat. Der Wechsel von der Arbeitsposition 21 in die Nichtarbeitsposition 25 erfolgt bei dem in der Figur 1 dargestellten Mähdrescher 1 im Uhrzeigersinn. Der umgekehrte Wechsel der Positionen erfolgt gegen den Uhrzeigersinn.

Die ortsfeste Anordnung der Fahrerkabine 20 mittig über dem Heckfahrwerk 18 hat den Vorteil, dass die Fahrerkabine 20 stets die Straßenfahrtrichtung SFR des Mähdreschers 1 nachvollzieht, unabhängig von der Stellung des der Fahrerkabine 20 nachgeordneten rückwärtigen Bereichs des Mähdreschers 1, der aufgrund einer die Wendigkeit des Mähdreschers 1 erhöhenden Drehgelenkverbindung 26 beispielsweise in Kurvenfahrten eine andere Position einnimmt als der Bereich, welcher der Fahrerkabine 20 und dem Heckfahrwerk 18 in der Nichtarbeitsposition 25 zugeordnet ist.

Wie in der Figur 2 abgebildet, sind während der Straßenfahrt die Arbeitsaggregatmodule 8.1 - 8.4 auf dem Mähdrescher 1 positioniert, um die maximal zulässige Transportbreite des Mähdreschers 1 nicht zu überschreiten. Um diese Ablagemöglichkeit zu schaffen, wird vor Beginn der Straßenfahrt zunächst die Fahrerkabine 20 in der zuvor beschriebenen Weise in die Nichtarbeitsposition 25 bewegt. Durch den Verschwenkvorgang der Fahrerkabine 20 von der Arbeitsposition 21 in die Nichtarbeitsposition 25 wird der zuvor durch die Fahrerkabine 20 benötigte Raum für die Arbeitsposition 21 auf dem Mähdrescher 1 frei. Um eine einfache und raumsparende Ablage und damit einen sicheren Straßentransport zu gewährleisten, werden nach dem Verschwenken der Fahrerkabine 20 zunächst das zweite Arbeitsaggregatmodul 8.1 und das dritte Arbeitsaggregatmodul 8.2 parallel nebeneinander und quer zur Straßenfahrtrichtung SFR auf dem Mähdrescher 1 abgelegt. Im Anschluss an die Ablage des zweiten und dritten Arbeitsaggregatmoduls 8.1, 8.2 wird das vierte Arbeitsaggregatmodul 8.3 und das fünfte Arbeitsaggregatmodul 8.4 parallel nebeneinander und in Straßenfahrtrichtung SFR über das zuvor abgelegt zweite und dritte Arbeitsaggregatmodul 8.1, 8.2 abgesetzt. Das erste Arbeitsaggregatmodul 8 wird in seiner Ausgangsposition an dem Mähdrescher 1 belassen, da das erste Arbeitsaggregatmodul 8 die Breite des Mähdreschers 1 nicht überschreitet und damit keine Beeinträchtigung für die Straßenfahrt darstellt.

Durch die Verlagerung der Arbeitsaggregatmodule 8.1 - 8.4 in den Bereich der Arbeitsposition 21 der Fahrerkabine 20 wird das Gewicht dieser Arbeitsaggregatmodule 8.1 - 8.4 gleichmäßig auf das Frontfahrwerk 16 und auf das mittlere Fahrwerk 17 verteilt. Die so erreichte Verteilung der Lasten und die Umkehr der Fahrtrichtung äußert sich besonders positiv bei Straßenfahrten, da beim Bremsen aus hohen Geschwindigkeiten das Gewicht der auf die Fahrwerke 16, 17 wirkenden Arbeitsaggregatmodule 8, 8.1 - 8.4 sowie das Eigengewicht der Fahrwerke 16, 17 ein Abheben des jeweiligen Fahrwerks 16, 17 verhindert.

Besonders vorteilhaft wirkt es sich aus, wenn die Bewegung der Fahrerkabine 20 und gegebenenfalls die Bewegung des Korntanks 6 an die Bewegung des Vorsatzgerätes 3, beziehungsweise der Arbeitsaggregatmodulee 8.1 - 8.4, gekoppelt ist, so dass das Verschwenken und/der Verschieben der Kabine 20 und des Korntanks 6 sowie das Verklappen des Vorsatzgerätes 3 selbsttätig und in Abhängigkeit voneinander erfolgt. Das bedeutet, dass nach erfolgter Straßenfahrt und bevorstehender Erntefahrt zunächst das vierte und fünfte Arbeitsaggregatmodul 8.3, 8.4 und im Anschluss hieran das zweite und dritte Arbeitsaggregatmodul 8.1, 8.2 ausgeklappt werden. Hierdurch wird der Raum für die Arbeitsposition 21 freigegeben und die Fahrerkabine 20 kann von der Nichtarbeitsposition 25 in die Arbeitsposition 21 verschwenkt werden.

Insgesamt wird durch die zugrundeliegende Erfindung dem Fahrer eine bequeme und übersichtliche Ernte- wie auch Straßenfahrt mit dem Mähdrescher 1 ermöglicht, ohne dass er in seiner Bewegungsfreiheit auf öffentlichen Straßen durch den Einsatz eines breiten Schneidwerkes eingeschränkt wird.

Es liegt im Rahmen des Könnens eines Fachmanns die beschriebene Erfindung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: selbstfahrender Mähdrescher
- 2: landwirtschaftliche Arbeitsmaschine
- 3: Vorsatzgerät
- 4: Erntegut
- 5: Förderorgan
- 6: Erntegutspeichermodul
- 7: Reinigungseinrichtung
- 8: Arbeitsaggregatmodul
- 8.1-8.4: Arbeitsaggregatmodule
- 9: Schneidwerk
- 10: Drescheinrichtung
- 11: Häckselvorrichtung
- 12: Gutaustrittsöffnung
- 13: Schwad
- 14, 14': Schwenkarm
- 15: Aufnahmevorrichtung
- 16: Frontfahrwerk
- 17: mittleres Fahrwerk
- 18: Heckfahrwerk
- 19: Trägerfahrzeugmodul
- 20: Fahrerkabine
- 21: Arbeitsposition
- 22: Schwenkvorrichtung
- 23: vertikale Drehachse
- 24: Schwenkarm
- 25: Nichtarbeitsposition
- 26: Drehgelenkvorrichtung
- 27: Sattelkupplung
- EFR: Erntefahrtrichtung
- SFR: Straßenfahrtrichtung

## Patentansprüche

1. Selbstfahrender Mähdrescher (1) mit einer bewegbaren Fahrerkabine (20), wobei dem selbstfahrenden Mähdrescher (1) ein aus einer Vielzahl von Arbeitsaggregatmodulen (8) bestehendes Vorsatzgerät (3) zugeordnet ist,
**dadurch gekennzeichnet, dass**
die Fahrerkabine (20) für die Erntefahrt in Arbeitsposition (21) in unmittelbare Nähe zu dem Vorsatzgerät (3) bewegbar ist und dass die Fahrerkabine (20) in Nichtarbeitsposition (25) von dem Vorsatzgerät (3) weg bewegbar ist.

2. Selbstfahrender Mähdrescher (1) nach Anspruch 1,
**dadurch gekennzeichnet, dass**
die Fahrerkabine (20) bei einteiligem Vorsatzgerät (3) in der Arbeitsposition (21) unmittelbar hinter dem Vorsatzgerät (3) positioniert ist.

3. Selbstfahrender Mähdrescher (1) nach einem oder mehreren der vorangegangenen Ansprüche,
**dadurch gekennzeichnet, dass**
die Fahrerkabine (20) bei mehrteiligem Vorsatzgerät (3) in der Arbeitsposition (21) zwischen zumindest zwei Arbeitsaggregatmodulen (8, 8.1,8.2) des Vorsatzgerätes (3) angeordnet ist.

4. Selbstfahrender Mähdrescher (1) nach einem oder mehreren der vorangegangenen Ansprüche,
**dadurch gekennzeichnet, dass**
die Bewegung der Fahrerkabine (20) zentrisch oder exzentrisch erfolgt.

5. Selbstfahrender Mähdrescher (1) nach einem oder mehreren der vorangegangenen Ansprüche,
**dadurch gekennzeichnet, dass**
die Bewegung der Fahrerkabine (20) mittels einer längenveränderlichen Schwenkvorrichtung (22) bewirkt wird.

6. Selbstfahrender Mähdrescher (1) nach einem oder mehreren der vorangegangenen Ansprüche,
**dadurch gekennzeichnet, dass**
die Änderung der Position der Fahrerkabine (20) durch Verschieben und/oder Verschwenken der Fahrerkabine (20) erfolgt.

7. Selbstfahrender Mähdrescher (1) nach einem oder mehreren der vorangegangenen Ansprüche,
**dadurch gekennzeichnet, dass**
das dem Mähdrescher (1) zugeordnete Vorsatzgerät (3) modular aufgebaut ist und die Arbeitsaggregatmodule (8) zumindest aus einem Schneidwerk (9) und einer dem Schneidwerk (9) nachgeordneten Drescheinrichtung (10) gebildet werden.

8. Selbstfahrender Mähdrescher (1) nach Anspruch 7,
**dadurch gekennzeichnet, dass**
das den Arbeitsaggregatmodulen (8) eine Häckslevorrichtung (11) zugeordnet ist.

9. Selbstfahrender Mähdrescher (1) nach einem oder mehreren der vorangegangenen Ansprüche,
**dadurch gekennzeichnet, dass**
das der Mähdrescher (1) einen Trägerfahrzeugmodul (19) umfasst und der Trägerfahrzeugmodul (19) zumindest eine Reinigungseinrichtung (7) und einen Erntegutspeichermodul (6) aufnimmt.

10. Selbstfahrender Mähdrescher (1) nach einem oder mehreren der vorangegangenen Ansprüche,
**dadurch gekennzeichnet, dass**
der modulare Aufbau des Vorsatzgerätes (3) veränderbar ist.

11. Selbstfahrender Mähdrescher (1) nach einem oder mehreren der vorangegangenen Ansprüche,
**dadurch gekennzeichnet, dass**
die Arbeitsaggregatmodule (8) unabhängig voneinander oder gemeinsam betreibbar sind.

12. Selbstfahrender Mähdrescher (1) nach einem oder mehreren der vorangegangenen Ansprüche,
**dadurch gekennzeichnet, dass**
die Arbeitsaggregatmodule (8) auf einer Linie oder versetzt zueinander liegen.

13. Verfahren zum Betreiben eines selbstfahrenden Mähdreschers (1) mit bewegbarer Fahrerkabine (20), wobei dem selbstfahrenden Mähdrescher (1) ein aus einer Vielzahl von Arbeitsaggregatmodulen (8) bestehendes Vorsatzgerät (3) zugeordnet ist,
**dadurch gekennzeichnet, dass**
die Arbeitsaggregatmodule (8) von einer Arbeits- in eine Nichtarbeitsstellung verschwenkbar sind und wobei die Arbeitsaggregatmodule (8) in der Nichtarbeitsstellung zumindest teilweise im Bereich der Fahrerkabine (20) in ihrer Arbeitsposition (21) angeordnet sind.

14. Verfahren zum Betreiben eines selbstfahrenden Mähdreschers (1) nach Anspruch 13,
**dadurch gekennzeichnet, dass**
die Arbeitsaggregatmodule (8) zunächst in Arbeitsposition ausschwenken und danach die Fahrerkabine (20) in die Arbeitsposition (21) und in unmittelbare Nähe zu den Arbeitsaggregatmodulen (8) bewegt wird und zur Einstellung der Nichtarbeitsposition zunächst die Fahrerkabine (20) von den Arbeitsaggregatmodulen (8) weg bewegt wird und danach die Arbeitsaggregatmodule (8) zumindest teilweise in dem Bereich der Fahrerkabine (20) in Arbeitsposition (21) positioniert werden.

15. Verfahren zum Betreiben eines selbstfahrenden Mähdreschers (1) nach einem der Ansprüche 13 oder 14,
**dadurch gekennzeichnet, dass**
die Bewegung der Fahrerkabine (20) und die Bewegung des Vorsatzgerätes (3) aneinander gekoppelt sind.

16. Verfahren zum Betreiben eines selbstfahrenden Mähdreschers (1) nach einem oder mehreren der vorangegangenen Ansprüche,
**dadurch gekennzeichnet, dass**
der Erntegutspeichermodul (6) von einer Arbeitsposition in eine Nichtarbeitsposition bewegbar ist und die Arbeitsaggregatmodule (8) in ihrer Nichtarbeitsposition wenigstens teilweise in dem Bereich des Erntegutspeichermoduls (6) in dessen Arbeitsposition angeordnet sind.

17. Verfahren zum Betreiben eines selbstfahrenden Mähdreschers (1) nach einem oder mehreren der vorangegangenen Ansprüche,
**dadurch gekennzeichnet, dass**
die Bewegung des Erntegutspeichermoduls (6) an die Bewegung der Fahrerkabine (20) und/oder an die Bewegung der Arbeitsaggregatmodule (8) gekoppelt ist.

18. Verfahren zum Betreiben eines selbstfahrenden Mähdreschers (1) nach einem oder mehreren der vorangegangenen Ansprüche,
**dadurch gekennzeichnet, dass**
die Arbeitsaggregatmodule (8) in der Nichtarbeitsposition in vertikaler Richtung wenigstens teilweise übereinanderliegend an dem Mähdrescher (1) positioniert sind.

19. Verfahren zum Betreiben eines selbstfahrenden Mähdreschers (1) nach einem oder mehreren der vorangegangenen Ansprüche,
**dadurch gekennzeichnet, dass**
das Vorsatzgerät (3) zumindest vier verschwenkbare Arbeitsaggregatmodule (8.1-8.4) umfasst und dass diese Arbeitsaggregatmodule (8.1-8.4) in der Nichtarbeitsposition jeweils paarweise in und quer zur Fahrtrichtung (EFR, SFR) und in vertikaler Richtung übereinander an dem Mähdrescher (1) positioniert sind.
